(19) Europäisches Patentamt
European Patent Office
Office européen des brevets

(11) **EP 4 145 008 B1**

(12) **EUROPEAN PATENT SPECIFICATION**

(45) Date of publication and mention
of the grant of the patent:
**16.10.2024 Bulletin 2024/42**

(21) Application number: **22192339.4**

(22) Date of filing: **26.08.2022**

(51) International Patent Classification (IPC):
**F16C 17/02** (2006.01)     **F16C 33/02** (2006.01)

(52) Cooperative Patent Classification (CPC):
**F16C 17/02; F16C 33/02;** F16C 2240/54;
F16C 2240/70; F16C 2326/30

(54) **SLIDING MEMBER AND METHOD FOR MANUFACTURING SLIDING MEMBER**

GLEITELEMENT UND VERFAHREN ZUM HERSTELLEN EINES GLEITELEMENTS

ÉLÉMENT COULISSANT ET PROCÉDÉ DE FABRICATION D'ÉLÉMENT COULISSANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2021 JP 2021145734**

(43) Date of publication of application:
**08.03.2023 Bulletin 2023/10**

(73) Proprietor: **Kabushiki Kaisha Kobe Seiko Sho
(Kobe Steel, Ltd.)
Kobe-shi, Hyogo 651-8585 (JP)**

(72) Inventors:
• **SUGITANI, Kazuya**
**Hyogo, 676-8670 (JP)**
• **HIRAO, Kenichiro**
**Hyogo, 676-8670 (JP)**
• **UEDA, Takashi**
**Hyogo, 676-8670 (JP)**
• **MATSUDA, Mariko**
**Hyogo, 676-8670 (JP)**

(74) Representative: **Müller-Boré & Partner
Patentanwälte PartG mbB
Friedenheimer Brücke 21
80639 München (DE)**

(56) References cited:
**EP-A1- 4 102 087     US-B2- 9 481 847**

**Description**

BACKGROUND OF THE INVENTION

Field of Invention

The present invention relates to a sliding member and a method for manufacturing a sliding member.

Description of the Related Art

A shaft member such as a crankshaft, an intermediate shaft, a propulsion shaft, or the like for a ship is slidably supported by a bearing member such as a slide bearing or the like. Furthermore, a lubricating liquid is supplied to a gap between the shaft member and the bearing member. The lubricating liquid forms a lubricating film between the shaft member and the bearing member to inhibit seizure therebetween. Meanwhile, if surface roughnesses of the shaft member and the bearing member are high relative to a thickness of the lubricating film, seizure is likely to occur between these members.

As a technique for inhibiting seizure of a sliding member, a method of smoothing a sliding face, e.g., a surface, of the shaft member is known. For example, Patent Document 1 discloses a combined sliding member having surface characteristics adaptable to a reduction in friction of an internal combustion engine.

Patent Document 1 describes that the reduction in friction can be achieved by setting a surface roughness Rz of a sliding face of a piston ring to 0.5 to 1.0 $\mu$m, the surface roughness Rz of a sliding face of a cylinder liner to 0.5 to 1.5 $\mu$m, an initial wear height Rpk to 0.05 to 0.2 $\mu$m, an effective load roughness Rk to 0.2 to 0.6 $\mu$m, and an oil sump depth Rvk to 0.10 to 0.35 $\mu$m. EP 4 102 087 A1, which is a document according to Article 54(3) EPC, discloses a sliding member comprising: a shaft member having a shaft diameter of greater than or equal to 180 mm; and a bearing member having an inner peripheral face which slidably supports an outer peripheral face of the shaft member.

Prior Art Documents

Patent Documents

Patent Document 1: Japanese Unexamined Patent Application, Publication No. 2004-116707 Patent Document 2: EP 4 102 087 A1

SUMMARY OF THE INVENTION

In manufacture of a large sliding member for a ship, deflection of the shaft member or the like during mechanical processing may make it difficult to increase accuracy of roundness and cylindricity of the shaft member. Therefore, it may be difficult for the sliding member to achieve sufficient dimensional accuracy by mechanical processing alone.

In view of the foregoing circumstances, in the manufacture of the large sliding member for a ship, manual polishing of the sliding face after the mechanical processing can be considered. However, in light of manufacturing cost and the like, it is not realistic to precisely control a surface shape of the sliding face of such a large sliding member in such a manner as described in Patent Document 1. Furthermore, in the sliding member for a ship or the like, hardness of the bearing member is not high in some cases, making polishing processing itself of a sliding face of the bearing member difficult.

The present invention was made in view of the foregoing circumstances, and an object of the present invention is to provide a sliding member which enables inhibition of seizure between a shaft member and a bearing member, while an increase in manufacturing cost is suppressed.

A sliding member according to the present invention made to solve the aforementioned problems is disclosed in claim 1.

Effects of the Invention

The sliding member according to the one aspect of the present invention enables inhibition of the seizure between the shaft member and the bearing member while an increase in manufacturing cost is suppressed.

BRIEF DESCRIPTION OF THE DRAWINGS

FIG. 1 is a schematic cross-sectional view illustrating a section perpendicular to an axial direction of a shaft member in a sliding member according to one embodiment of the present invention.

FIG. 2 is a flowchart illustrating a method for manufacturing a sliding member according to another embodiment of the present invention.

FIG. 3 is a graph showing a relationship between a minimum film thickness ratio and a bearing pressure applied to a bearing member in each of No. 10 to No. 12.

FIG. 4 is a graph showing a relationship between the minimum film thickness ratio and the bearing pressure applied to a bearing member in each of No. 6, No. 7, and No. 9.

FIG. 5 is a graph showing a relationship between the minimum film thickness ratio and the bearing pressure applied to a bearing member in each of No. 8, No. 13, and No. 14.

FIG. 6 is a graph showing a relationship between the minimum film thickness ratio and a maximum contact pressure in each of No. 6 to No. 14.

FIG. 7 is a schematic cross-sectional view illustrating a section including a central axis of a shaft member in each of No. 6 to No. 9.

FIG. 8 is a schematic cross-sectional view illustrating a section including a central axis of a shaft member in No. 13.

FIG. 9 is a schematic cross-sectional view illustrating a section including a central axis of a shaft member in No. 14.

FIG. 10 is a graph showing a relationship between an arithmetic mean roughness of the shaft member and a seizure limit bearing pressure.

FIG. 11 is a graph showing a relationship between a contact rate between the shaft member and the bearing member, and the seizure limit bearing pressure.

## DESCRIPTION OF THE PREFERRED EMBODIMENTS

Description of Embodiments of the Present Invention

Firstly, embodiments of the present invention are listed and described.

A sliding member according to one aspect of the present invention includes: a shaft member having a shaft diameter of greater than or equal to 180 mm; and a bearing member having an inner peripheral face which slidably supports an outer peripheral face of the shaft member, wherein in a case in which an arithmetic mean roughness of the outer peripheral face is denoted by Rai [$\mu$m], a contact rate $A_{at}$ between the outer peripheral face and the inner peripheral face satisfies the following formula 1.

$$A_{at} \geqq 3.04 \, Ra_1{}^{0.78} \qquad \cdot \cdot \cdot 1$$

In general, in a case in which the contact rate between the outer peripheral face of the shaft member and the inner peripheral face of the bearing member is high, the bearing pressure applied to the inner peripheral face of the bearing member decreases; thus, seizure between these members is easily inhibited. By satisfying the above formula 1, the sliding member enables controlling the contact rate to be greater than or equal to a limit value at which the seizure can be inhibited. Furthermore, due to using the above formula 1, the sliding member does not require precise control of the surface shape of the sliding face, and thus an increase in manufacturing cost can be inhibited.

The arithmetic mean roughness Rai is preferably less than or equal to 0.20 $\mu$m. Thus, owing to the arithmetic mean roughness Rai being less than or equal to the upper limit, the seizure between the shaft member and the bearing member can be more surely inhibited.

The shaft member is preferably a crank journal or a crankpin of a crankshaft. The crankshaft has sites which are eccentric to each other, and thus deflection is likely to occur in mechanical processing. Therefore, it is difficult to increase the dimensional accuracy by mechanical processing alone, and manual polishing is especially likely to be required after the mechanical processing. On the other hand, due to using the above formula 1, the sliding member does not require precise control of the surface shape of the sliding face; thus, in the case in which the shaft member is a crank journal or a crankpin of a crankshaft, an increase in manufacturing cost can be effectively inhibited.

Another aspect of the present invention is a method for manufacturing a sliding member including: a shaft member having a shaft diameter of greater than or equal to 180 mm; and a bearing member having an inner peripheral face which slidably supports an outer peripheral face of the shaft member, the method including: a polishing step of manually polishing the outer peripheral face such that in a case in which an arithmetic mean roughness of the outer peripheral face is denoted by Rai [$\mu$m], a contact rate $A_{at}$ between the outer peripheral face and the inner peripheral face satisfies the above formula 1.

According to the method for manufacturing a sliding member, by manually polishing the outer peripheral face in the polishing step such that the above formula 1 is satisfied, the contact rate can be controlled to be greater than or equal to the limit value at which the seizure can be inhibited. Furthermore, due to using the above formula 1 in the polishing step, the method for manufacturing a sliding member does not require precise control of the surface shape of the sliding face, and thus an increase in manufacturing cost can be inhibited.

It is to be noted that in the present invention, the "shaft diameter" means a diameter of the outer peripheral face of the shaft member, and the "arithmetic mean roughness" means a value measured according to JIS-B0601 (2013) at a high-frequency cut-off value ($\lambda$c) of 0.8 mm and a low-frequency cut-off value ($\lambda$s) of 2.5 $\mu$m.

In the present invention, the "contact rate" means a proportion of an area of a part which has come into contact with the bearing member, in the total sliding area of the outer peripheral face of the shaft member in a case in which the shaft member is rotated around a central axis thereof while the outer peripheral face of the shaft member is pressed against the inner peripheral face of the bearing member at an arbitrary angle in a radial direction of the shaft member.

Details of Embodiments of the Present Invention

Hereinafter, embodiments of the present invention are described in detail with reference to the drawings.

Sliding Member

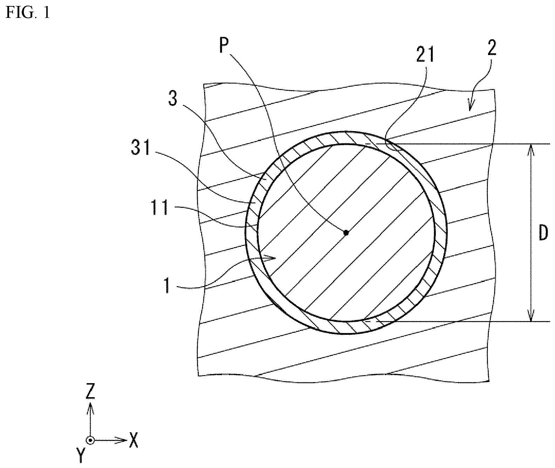

The sliding member in FIG. 1 includes: a shaft member 1 having a shaft diameter D of greater than or equal to 180 mm; a bearing member 2 having an inner peripheral face 21 which slidably supports an outer peripheral face 11 of the shaft member 1; and a lubricating oil 3. A central axis P of the shaft member 1 extends in a horizontal direction (a Y direction in FIG. 1). The inner peripheral face 21 of the bearing member 2 surrounds the outer peripheral face 11 of the shaft member 1 along a circumferential direction. The lubricating oil 3 is supplied to a gap between the outer peripheral face 11 of the shaft member 1 and the inner peripheral face 21 of the bearing member 2. Furthermore, the lubricating oil 3 forms an oil film 31. The inner peripheral face 21 slidably supports the outer peripheral face 11 by thus facing the outer peripheral face 11 with the oil film 31 interposed therebetween.

According to the problem posed for the invention in the shaft member 1 having the shaft diameter of greater than or equal to 180 mm, it is difficult to increase the dimensional accuracy of the outer peripheral face 11 by mechanical processing alone; therefore, according to the invention a part not the entirety of the outer peripheral face 11 is manually polished after the mechanical processing. As referred to herein, to "manually polish" means manually polishing with sandpaper or the like.

In a case in which an arithmetic mean roughness of the outer peripheral face 11 (more specifically, an arithmetic mean roughness of the outer peripheral face 11 after manual polishing thereof) is denoted by Rai [$\mu$m], the contact rate $A_{at}$ between the outer peripheral face 11 and the inner peripheral face 21 satisfies the following formula 1. It is to be noted that as the "arithmetic mean roughness Rai", a value determined by the following procedure can be employed. Firstly, four circumferential positions are decided at intervals of 90 deg along the circumferential direction of the outer peripheral face 11. Next, for each of these circumferential positions, two measurement points which differ in position in the axial direction are set. Then, arithmetic mean roughnesses measured at the measurement points at an evaluation length 4 mm are averaged, and the resulting average value is determined as the arithmetic mean roughness Rai of the outer peripheral face 11. Furthermore, the evaluation length can be set along a direction orthogonal to a direction of the manual polishing. For example, in a case in which the outer peripheral face 11 is polished along the circumferential direction, the evaluation length can be set along the axial direction of the shaft member 1.

$$A_{at} \geq 3.04 Ra_1^{0.78} \qquad \cdots 1$$

The upper limit of the contact rate $A_{at}$ is not particularly limited and is, for example, preferably 0.90, more preferably 0.85, and still more preferably 0.80. When the contact rate $A_{at}$ is greater than the upper limit, a polishing amount in the case of the manual polishing increases, and thus there may be a possibility that the manufacturing cost cannot be suppressed. It is to be noted that the "contact rate $A_{at}$" can be determined, for example, by using a straight edge having a plane which extends parallel to the axial direction of the shaft member 1, or a shell-shaped bearing model having an inner peripheral face which partly surrounds the outer peripheral face 11 of the shaft member 1. In these methods for measuring the contact rate $A_{at}$, ink is applied to the plane or the inner peripheral face, and then the plane or the inner peripheral face is pressed against the entirety of the outer peripheral face 11 of the shaft member 1 to transfer the ink thereonto. After that, a part onto which the ink has been transferred is defined as a contact part which comes into contact with the inner peripheral face 21, the contact part being in the outer peripheral face 11, and the contact rate $A_{at}$ is determined by a transfer rate of the ink. In implementation of the method using the straight edge or the method using the bearing model, ink diluted with a diluent is preferably used. For example, it is preferred to use Red Touch Paste, available from Daizo Corporation, by diluting such that consistency as defined in JIS-K2220 (2013) is greater than or equal to 250 and less than or equal to 300. The consistency can be controlled by adjusting a concentration of the ink in accordance with a temperature of the ink in measurement of the contact rate $A_{at}$. Specifically, the consistency can be controlled in the following manner: in a case in which the temperature of the ink during the measurement is higher than or equal to 0 °C and lower than or equal to 14 °C, the concentration of the ink is set to 65%; in a case in which the temperature is higher than 14 °C and lower than or equal to 24 °C, the concentration of the ink is set to 70%; and in a case in which the temperature is higher than 24 °C and lower than or equal to I40 °C, the concentration of the ink is set to 75%. Applying the ink which has been thus diluted to the straight edge or the bearing model facilitates determining microscopic unevenness of the outer peripheral face 11 when the ink has been transferred.

Shaft Member

The shaft member 1 is a rotating body which rotates in the circumferential direction with respect to the bearing member 2. The shaft member 1 is exemplified by a crankshaft, an intermediate shaft, a propulsion shaft, and the like for a ship, each of which is to be disposed in a ship. Examples of a material of the shaft member 1 include carbon steel, low-alloy steel, an aluminum alloy, and the like.

The shaft member 1 is preferably a crank journal or a crankpin of a crankshaft. The crankshaft has a large number of sites which are eccentric to each other, and thus deflection is likely to occur in mechanical processing. Therefore, it is difficult to increase the dimensional accuracy by mechanical processing alone, and manual polishing of the outer peripheral face 11 of the shaft member 1 is especially likely to be required after the mechanical processing. On the other hand, due to using the above formula 1, the sliding member does not require precise control of surface characteristics of the sliding face. Accordingly, in the case in which the shaft member 1 is a crank journal or a crankpin of a crankshaft, the sliding member enables effective inhibition of an increase in manufacturing cost.

The lower limit of the shaft diameter D of the shaft member 1 is 180 mm as described above, may be 280 mm, and may be 360 mm. In a case in which the shaft diameter D of the shaft member 1 is greater than or equal to the lower limit, it is difficult to increase the dimensional accuracy by mechanical processing alone, and manual polishing of the outer peripheral face 11 of the shaft member 1 is likely to be required after the mechanical processing. Meanwhile, in light of the manufacturing cost and the like, to strictly control the surface shape of the outer peripheral face 11 of the shaft member 1 having a large diameter by manual polishing is far from realistic. With regard to this point, due to using the above formula 1, the sliding member does not require precise control of the surface shape of the sliding face. Therefore, even when the shaft diameter D of the shaft member 1 is greater than or equal to the lower limit, an increase in manufacturing cost can be inhibited.

The upper limit of the shaft diameter D of the shaft member 1 is preferably 1,500 mm, more preferably 1,400 mm, and still more preferably 1,300 mm. When the shaft diameter D is greater than the upper limit, the sliding member may become too large, which may be contrary to a demand for, e.g., a reduction in device size.

The lower limit of a Young's modulus of the shaft member 1 is preferably 190 GPa, more preferably 200 GPa, and still more preferably 210 GPa. When the Young's modulus of the shaft member 1 is less than the lower limit, deflection of the shaft member 1 may increase at the time of the mechanical processing. As a result, time required for the manual polishing increases, and thus it may be difficult to sufficiently suppress the manufacturing cost. On the other hand, the sliding member exhibits especially superior effects in a case in which deflection of the shaft member 1 occurs to some degree. In light of this, the upper limit of the Young's modulus of the shaft member 1 is not particularly limited and may be, for example, 220 GPa.

The upper limit of the arithmetic mean roughness Rai of the outer peripheral face 11 is preferably 0.20 $\mu$m, more preferably 0.16 $\mu$m, and still more preferably 0.08 $\mu$m. When the arithmetic mean roughness Rai is greater than the upper limit, it may be difficult to inhibit the seizure between the outer peripheral face 11 and the inner peripheral face 21. Meanwhile, the lower limit of the arithmetic mean roughness Rai can be set to 0.01 $\mu$m in light of enabling easily adjusting the surface shape of the outer peripheral face 11 by the manual polishing, and may be 0.04 $\mu$m.

The shaft member 1 may have contact-free parts on both ends in the axial direction thereof, the contact-free parts not coming into contact with the bearing member 2. That is to say, on the both ends in the axial direction, the outer peripheral face 11 of the shaft member 1 may be provided with non-contact parts at which no contact occurs in the above-described method for measuring the contact rate $A_{at}$. In the case in which the shaft member 1 is a crank journal or a crankpin as described above, the contact-free parts are likely to be generated. The sliding member having a configuration in which the shaft member 1 has such contact-free parts enables easy inhibition of the seizure between the shaft member 1 and the bearing member 2.

On the outer peripheral face 11 of the shaft member 1, a plurality of roughness projection apices may be present, wherein the roughness projection apices are calculated by the following procedure. Firstly, based on a roughness curve with a measured length of 4.0 mm, the roughness curve being measured at a cut-off value of 0.25 mm according to JIS-B0601 (2013), an average line of the roughness curve is set according to JIS-B0601 (2013). With the average line as a reference, heights of measurement points above the average line are defined as positive values, while heights of measurement points below the average line are defined as negative values. An average value of the heights of all the measurement points having positive values is denoted by Thr0. Next, of the measurement points on the roughness curve, a measurement point which is higher than measurement points adjacent thereto on both sides and has a height of greater than -Thr0 is defined as a temporary apex. Of measurement points between temporary apices adjacent to each other, a measurement point having a smallest height (having a largest depth from the temporary apices adjacent to each other) is defined as a valley. Then, for all the temporary apices, height differences between a temporary apex and each of valleys adjacent to the temporary apex on both sides are respectively determined, and apices in which the larger value of these height differences is less than $0.2 \times$ Thr0 are excluded. As a result, remaining temporary apices are determined as roughness projection apices.

In a case in which the roughness projection apices are present on the outer peripheral face 11 of the shaft member 1, the lower limit of a radius of curvature of roughness projections on the outer peripheral face 11 may be 55 $\mu$m, and may be 58 $\mu$m. When the manual polishing is performed, the radius of curvature of roughness projections is likely to increase. When the radius of curvature of roughness projections is large, seizure is likely to occur between the outer peripheral face 11 and the inner peripheral face 21. Even with such a configuration, the sliding member enables easy inhibition of the seizure between the outer peripheral face 11 and the inner peripheral face 21.

It is to be noted that the "radius of curvature of roughness projections" as referred to herein means a value calculated by the following procedure. Firstly, straight lines are drawn toward the roughness projection apex from all measurement points between the roughness projection apex and valleys adjacent to the roughness projection apex on both sides, and the measurement point for which the slope of the straight line is the largest is defined as an end of the roughness projection. The radius of curvature of each roughness projection is determined by -0.5/a, wherein a denotes a quadratic coefficient of a quadratic function obtained by approximating a roughness curve between both ends of each roughness projection by the method of least squares. A median of the radii of curvature of all the roughness projections on the roughness curve is determined as the radius of curvature of the roughness projections.

When the manual polishing is performed, the outer peripheral face 11 of the shaft member 1 is likely to have a large radius of curvature of roughness projections as described above. Furthermore, with regard to other roughness characteristics of the outer peripheral face 11, the degree of roughness is also likely to increase. In this case, by using sandpaper having a sufficiently large grit number, the arithmetic mean roughness Rai of the outer peripheral face 11 can be reduced. For example, by polishing with sandpaper having roughness of a grit number of greater than or equal to 200, the arithmetic mean roughness Rai can be reduced to less than or equal to 0.20 $\mu$m. The grit number of the sandpaper may be greater than 500, and may be greater than 600. A procedure for polishing with the sandpaper is exemplified by a method in which the sandpaper is pressed with the hand against the outer peripheral face 11 while rotating the shaft member 1, thereby polishing the outer peripheral face 11 along the circumferential direction of the outer peripheral face 11. Furthermore, in a case in which it is difficult to polish while rotating the shaft member 1, e.g., in case of a crankshaft for a ship or the like, a method may be employed in which the outer peripheral face 11 is manually rubbed with the sandpaper along the circumferential direction of the outer peripheral face 11.

Bearing Member

The bearing member 2 is exemplified by a crank bearing, an intermediate bearing, a propulsion bearing, and the like for a ship, each of which is to be disposed in a ship. Examples of a material of the bearing member 2 include white metal, an aluminum alloy, trimetal, kelmet, and the like.

A hardness $H_1$ [HV] of the shaft member 1 is preferably higher than a hardness $H_2$ [HV] of the bearing member 2. In general, since the hardness $H_2$ of the bearing member 2 is low, it is difficult to intentionally control the surface roughness of the inner peripheral face 21 by mechanical processing and/or the like. Even in such a case, by setting the hardness $H_1$ of the shaft member 1 to be higher than the hardness $H_2$ of the bearing member 2, the inner peripheral face 21 of the bearing member 2 can be polished owing to the sliding with the shaft member 1. As a result, the surface roughness of the inner peripheral face 21 of the bearing member 2 is reduced, and thus the contact rate $A_{at}$ between the outer peripheral face 11 and the inner peripheral face 21 is easily controlled. The lower limit of a ratio ($H_1/H_2$) of the hardness $H_1$ of the shaft member 1 to the hardness $H_2$ of the bearing member 2 is preferably 4.1, more preferably 5.0, still more preferably 6.0, and particularly preferably 8.0. When the above ratio is less than the lower limit, it may be difficult to reduce the surface roughness of the inner peripheral face 21 by rotation of the shaft member 1. Conversely, the upper limit of the above ratio is not particularly limited and may be, for example, 20 in light of ease of selection of materials of the shaft member 1 and the bearing member 2, and the like.

Lubricating Oil

The lubricating oil 3 is exemplified by paraffin base oil and the like. By forming the oil film 31, the lubricating oil 3 facilitates maintaining a fluid lubrication state between the outer peripheral face 11 and the inner peripheral face 21.

The lower limit of a viscosity of the lubricating oil 3 is preferably $4.8 \times 10^{-3}$ Pa sec, and more preferably $9.8 \times 10^{-3}$ Pa sec. When the viscosity is less than the lower limit, there may be a possibility that the seizure between the outer peripheral face 11 and the inner peripheral face 21 cannot be sufficiently inhibited. Conversely, the upper limit of the viscosity of the lubricating oil 3 is preferably $1.1 \times 10^{-1}$ Pa sec, and more preferably $8.1 \times 10^{-2}$ Pa·sec. When the viscosity is greater than the upper limit, there may be a possibility that a friction loss between the outer peripheral face 11 and the inner peripheral face 21 cannot be sufficiently inhibited. It is to be noted that the viscosity as referred to herein means a viscosity calculated based on a temperature of the oil film 31 during steady driving of the shaft member 1. Furthermore, "during steady driving" as referred to herein means a point of time at which the rotation of the shaft member 1 is kept constant except for the start and end of the rotation of the shaft member 1.

Advantages

Due to satisfying the above formula 1, the sliding member enables controlling the contact rate $A_{at}$ to be greater than or equal to the limit value at which the seizure can be inhibited. Furthermore, due to using the above formula 1, the sliding member does not require precise control of the surface shape of the sliding face, e.g., does not require controlling roughness characteristics other than the arithmetic mean roughness Rai to fall within predetermined ranges, controlling the contact rate $A_{at}$ to be excessively large, etc. Thus, the sliding member enables inhibition of the seizure between the shaft member 1 and the bearing member 2 as well as inhibition of an increase in manufacturing cost.

Method for Manufacturing Sliding Member

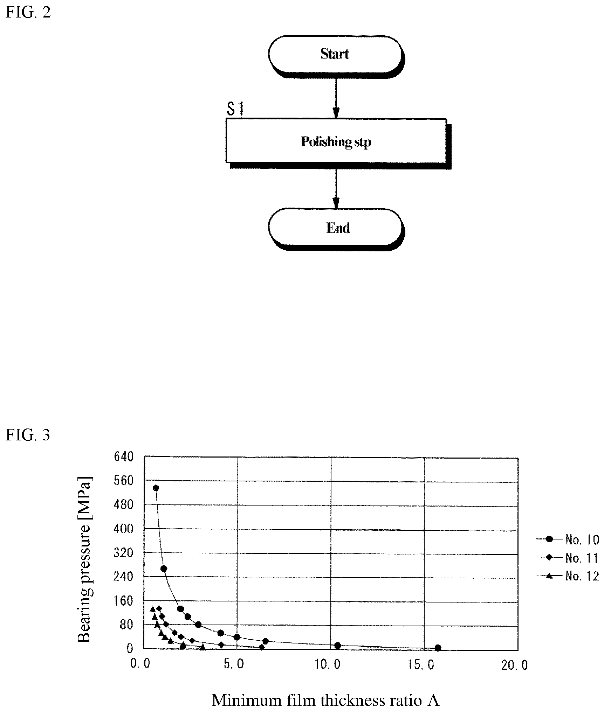

By the method for manufacturing a sliding member in FIG. 2, the sliding member in FIG. 1 is manufactured. The method for manufacturing a sliding member includes a polishing step S1 of manually polishing the outer peripheral face 11 of the shaft member 1.

Polishing Step

In the polishing step S1, the outer peripheral face 11 is manually polished such that the contact rate $A_{at}$ between the outer peripheral face 11 and the inner peripheral face 21 satisfies the above formula 1. In the polishing step S1, the outer peripheral face 11 is polished to satisfy the above formula 1 in such a manner that the contact rate $A_{at}$ is increased or the arithmetic mean roughness Rai of the outer peripheral face 11 is reduced.

A method for increasing the contact rate $A_{at}$ is exemplified by a method in which a contact part of the outer peripheral face 11 is specified using the above-mentioned straight edge or shell-shaped bearing model, and then the contact part is partly polished such that the total contact rate between the outer peripheral face 11 and the inner peripheral face 21 can be increased.

A method for reducing the arithmetic mean roughness Rai of the outer peripheral face 11 is exemplified by polishing the outer peripheral face 11 with sandpaper having a large grit number. The grit number of the sandpaper is preferably greater than or equal to 200, more preferably greater than or equal to 500, and still more preferably greater than or equal to 600. By thus using the sandpaper having a large grit number, the arithmetic mean roughness Rai of the outer peripheral face 11 is easily reduced to satisfy the above formula 1.

Advantages

According to the method for manufacturing a sliding member, by manually polishing the outer peripheral face 11 in the polishing step S 1 such that the above formula 1 is satisfied, the contact rate $A_{at}$ can be controlled to be greater than or equal to the limit value at which the seizure can be inhibited. Furthermore, due to using the above formula 1 in the polishing step S 1, the method for manufacturing a sliding member does not require precise control of the surface shape of the sliding face. Thus, the method for manufacturing a sliding member enables inhibition of the seizure between the shaft member 1 and the bearing member 2 as well as inhibition of an increase in manufacturing cost.

Other Embodiments

The above-described embodiments do not limit the configuration of the present invention. Therefore, in the above-described embodiments, the components of each part of the above-described embodiments can be omitted, replaced, or added based on the description in the present specification and general technical knowledge. The present invention is limited by the scope of the appended claims.

In the above-described embodiments, the central axis of the shaft member extends in the horizontal direction; however, the central axis of the shaft member may be inclined to the horizontal direction.

In the above-described embodiments, the lubricating oil is supplied to the gap between the outer peripheral face of the shaft member and the inner peripheral face of the bearing member; however, a lubricating liquid other than the lubricating oil may be used for the sliding member. For example, it is possible to use seawater or the like as the lubricating liquid.

EXAMPLES

Hereinafter, the present invention is described in detail by way of Examples; the present invention should not be construed as being limited to description in the Examples. In the Examples, a seizure test and a simulation test were performed.

Seizure Test

A shaft member and a bearing member having an inner peripheral face which surrounded the entire periphery of an outer peripheral face of the shaft member were fixed to a frictional wear tester available from KOBELCO MACHINERY ENGINEERING Co., Ltd. The seizure test of each of No. 1 to No. 5 was performed using the frictional wear tester in such a manner that the shaft member was rotated while the inner peripheral face of the bearing member was pressed against the outer peripheral face of the shaft member under the following configuration conditions and operating conditions. A load from the bearing member to the shaft member was increased in stages from the start of the test to a maximum load. When seizure occurred between the shaft member and the bearing member, the frictional wear tester was stopped, and the load at a stage immediately before that of the load at that point of time was defined as a limit load. In this seizure test, the outer peripheral face of the shaft member was manually polished by pressing sandpaper with the hand against the outer peripheral face of the shaft member while rotating the shaft member. By the manual polishing, the arithmetic mean roughness $Ra_i$ of the outer peripheral face of the shaft member, and the contact rate between the shaft member and the bearing member were controlled. In this seizure test, owing to the shaft member having a relatively shaft diameter being used for the test, with regard to each of the following No. 1 to No. 5, the contact rate between the shaft member and the bearing member could be improved to substantially 100%. Table 1 shows whether seizure occurred and the limit load in the seizure test.

No. 1

In No. 1, carbon steel having a Young's modulus of 210 GPa and a Poisson's ratio of 0.30 was used as the shaft member, and the shaft diameter was set to 48.00 mm (tolerance: -0.090 mm to -0.075 mm). The arithmetic mean roughness of the outer peripheral face of the shaft member was controlled to be 0.0765 $\mu$m. It is to be noted that in No. 1 to No. 5, the arithmetic mean roughness of the outer peripheral face of the shaft member was determined by the above-described method for measuring the arithmetic mean roughness $Ra_i$ in such a manner that the evaluation length was set along the axial direction of the outer peripheral face of the shaft member. As the bearing member, a slide bearing, available from DAIDO METAL CO., LTD., constituted by a combination of an upper half member and a lower half member was used. With regard to the slide bearing, white metal corresponding to WJ1 as defined in JIS-H5401 (1958) is used, the Young's modulus being 55 GPa and the Poisson's ratio being 0.33; a diameter of the inner peripheral face is 48.00 mm (tolerance: 0 mm to +1.05 mm); and an axial direction length of the inner peripheral face (bearing width) is 15.6 mm. The arithmetic mean roughness of the inner peripheral face of the bearing member was set to 0.8000 $\mu$m. A rotation speed of the shaft member was set to a constant value of 3,500 rpm. Furthermore, at the time of rotating the shaft member, "FBK OIL RO32", available from ENEOS Corporation, was supplied as the lubricating oil between the outer peripheral face of the shaft member and the inner peripheral face of the bearing member. A supply temperature of the lubricating oil was set to 70 °C, and circulating oil supply was employed as a supply method. The load from the bearing member to the shaft member was set to 0.0 kN at the start of the test and increased in stages by 0.5 kN at intervals of 5 minutes to the maximum load of 20.0 kN.

No. 2

In No. 2, low-alloy steel in which the Young's modulus was 210 GPa and the Poisson's ratio was 0.30 was used as the shaft member, and the shaft diameter was set to 48.00 mm (tolerance: -0.090 mm to -0.075 mm). The arithmetic mean roughness of the outer peripheral face of the shaft member was controlled to be 0.0680 $\mu$m. The bearing member was the same as in No. 1. The rotation speed of the shaft member was set to a constant value of 3,500 rpm. Furthermore, as in No. 1, the lubricating oil was supplied between the outer peripheral face of the shaft member and the inner peripheral face of the bearing member. The load from the bearing member to the shaft member was set to 0.0 kN at the start of the test and increased in stages by 5.0 kN at intervals of 5 minutes to the maximum load of 20.0 kN.

No. 3

The configuration conditions and the operating conditions of No. 3 were similar to those of No. 1 except that the arithmetic mean roughness of the outer peripheral face of the shaft member was controlled to be 0.1600 μm.

No. 4

The configuration conditions and the operating conditions of No. 4 were similar to those of No. 1 except that the arithmetic mean roughness of the outer peripheral face of the shaft member was controlled to be 0.4225 μm.

No. 5

The configuration conditions and the operating conditions of No. 5 were similar to those of No. 2 except that the arithmetic mean roughness of the outer peripheral face of the shaft member was controlled to be 0.2450 μm.

Table 1

| No. | No. 1 | No. 2 | No. 3 | No. 4 | No. 5 |
|---|---|---|---|---|---|
| Occurrence of seizure | No | No | No | Yes | Yes |
| Limit load [kN] | - | - | - | 8.5 | 5.0 |

As shown in Table 1, the limit load of No. 4, in which the arithmetic mean roughness of the outer peripheral face of the shaft member is 0.4225 μm, is 8.5 kN. This means that seizure occurred at the point of time when the load was 9.0 kN. Furthermore, the limit load of No. 5, in which the arithmetic mean roughness of the outer peripheral face of the shaft member is 0.2450 μm, is 5.0 kN. This means that seizure occurred at the point of time when the load was 10.0 kN. No. 1 to No. 3, in which no seizure occurred, satisfy the above formula 1. On the other hand, No. 4 and No. 5, in which seizure occurred, do not satisfy the above formula 1.

Simulation Test

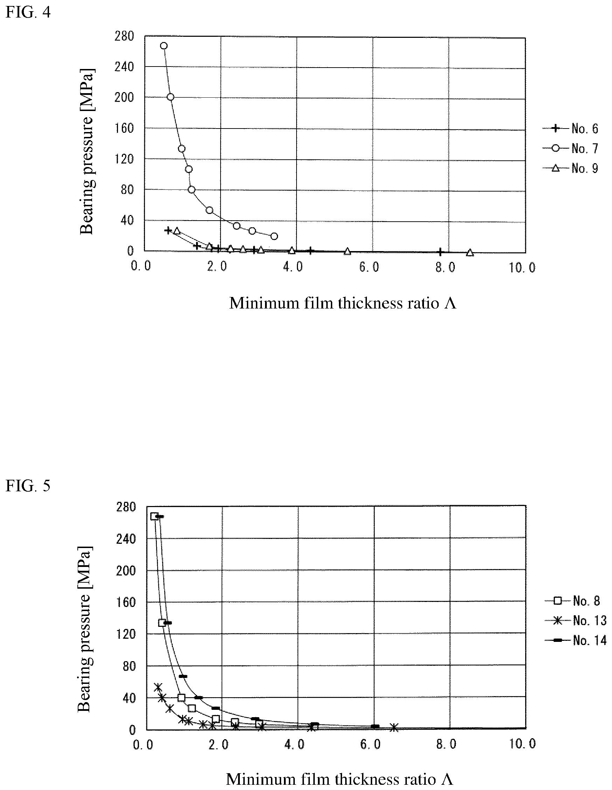

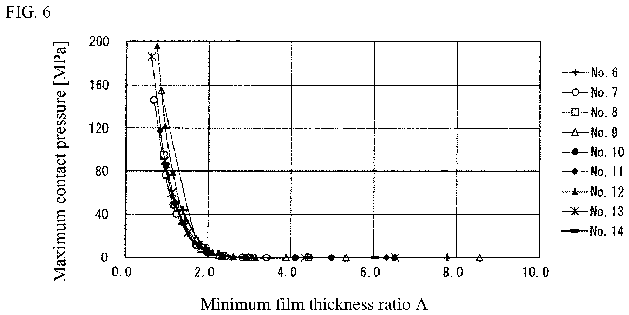

In the simulation test, EXCITE Power Unit (EXCITE 2019 R1, available from AVL List GmbH) was used as software, and the following configuration conditions and operating conditions were set to confirm a sliding state between the shaft member and the bearing member. As an analysis model of each of the following No. 6 to No. 14, a single bearing model (joint: EHD2) was used. The lubricating oil was supplied between the outer peripheral face of the shaft member and the inner peripheral face of the bearing member by circulating oil supply. FIG. 3 shows the relationship between a minimum film thickness ratio A and the bearing pressure applied to the inner peripheral face in each of No. 10 to No. 12; FIG. 4 shows the relationship between the minimum film thickness ratio A and the bearing pressure applied to the inner peripheral face in each of No. 6, No. 7, and No. 9; FIG. 5 shows the relationship between the minimum film thickness ratio A and the bearing pressure applied to the inner peripheral face in each of No. 8, No. 13, and No. 14; and FIG. 6 shows the relationship between the minimum film thickness ratio A and the maximum contact pressure in each of No. 6 to No. 14. It is to be noted that the "minimum film thickness ratio" as referred to herein means a value calculated according to the following formula 2 in a case in which a minimum oil film thickness of the lubricating oil is denoted by $h_{min}$ [μm], the arithmetic mean roughness of the outer peripheral face of the shaft member is denoted by $Ra_i$ [μm], and the arithmetic mean roughness of the inner peripheral face of the bearing member is denoted by $Ra_2$ [μm]; and the "maximum contact pressure" as referred to herein means a maximum pressure at a time of solid contact between the outer peripheral face of the shaft member and the inner peripheral face of the bearing member.

$$\Lambda = \frac{h_{min}}{1.3 \sqrt{Ra_1{}^2 + Ra_2{}^2}} \qquad \cdots 2$$

No. 6

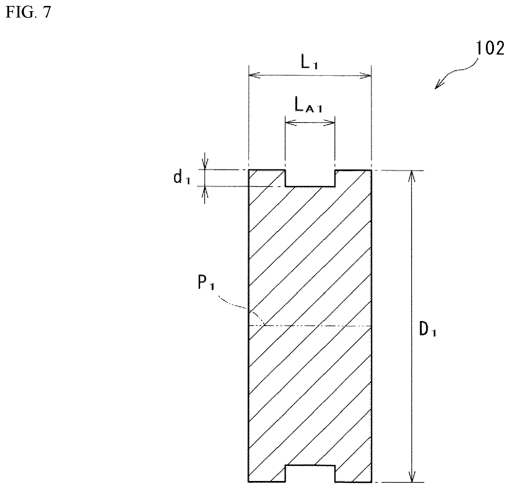

In No. 6, a shaft member 102 in FIG. 7 was used, and the following configuration conditions and operating conditions were set.

Configuration conditions

Shaft member: as the shaft member 102, steel in which an axial direction length $L_1$ was 15.6 mm, a shaft diameter $D_1$ was 48.0 mm, a stiffness was 205,000 N/mm$^2$, and the Poisson's ratio was 0.30 was used. The arithmetic mean roughness Rai of an outer peripheral face of the shaft member 102 was set to 0.40 $\mu$m, and a root mean square roughness Rqi was set to 0.520 $\mu$m, obtained by multiplying the arithmetic mean roughness Rai by 1.3. As roughness parameters (Summit Roughness, Mean Summit Height, and Elastic Factor) to be input to the software, values obtained by converting the arithmetic mean roughness Rai by the following procedure were employed. Firstly, six small shaft members (shaft diameter: 39.96 mm; axial direction length: 42 mm) were prepared, and each outer peripheral face was manually polished such that the arithmetic mean roughness Ra of the outer peripheral face varied in a range from approximately 0.07 $\mu$m to 0.60 $\mu$m. The arithmetic mean roughness Ra was determined by the above-described method for measuring the arithmetic mean roughness Rai in such a manner that the evaluation length was set along the axial direction of the outer peripheral face of the small shaft member. Furthermore, based on waveform data acquired in the measurement of the arithmetic mean roughness Ra, the roughness parameters were determined according to definitions in the manual of the software. Then, regression equations representing relationships between the arithmetic mean roughness Ra and the respective roughness parameters were derived, and according to these regression equations, the predetermined arithmetic mean roughness Rai was converted to the corresponding roughness parameters. Also in the following No. 7 to No. 14, values converted by the above-described method were employed as the roughness parameters of the shaft member to be input to the software. The outer peripheral face of the shaft member 102 has one ring-shaped concave portion extending in the circumferential direction thereof. The concave portion has a rectangular cross section with a width (length in the axial direction of the shaft member 102) of $L_{A1}$ [mm] and a depth of $d_1$ [mm]. In the axial direction of the shaft member 102, distances from both ends of the shaft member 102 to the concave portion are equal. The depth $d_1$ of the concave portion was set to 10 $\mu$m. The concave portion is a contact-free part which does not come into contact with the bearing member at the time of rotating the shaft member 102. Thus, the contact rate $A_{at}$ between the shaft member 102 and the bearing member is calculated by $(L_1 - L_{A1}) / L_1$. The width $L_{A1}$ of the concave portion was set to a value at which the contact rate $A_{at}$ was 0.6.

Bearing member: as the bearing member, white metal in which the axial direction length of the inner peripheral face (bearing width) was 15.6 mm, a radial gap with the shaft member was 0.047 mm, the stiffness was 5,000 N/mm$^2$, and the Poisson's ratio was 0.33 was used. The arithmetic mean roughness $Ra_2$ of the inner peripheral face of the bearing member was set to 0.40 $\mu$m, and a root mean square roughness $Rq_2$ was set to 0.520 $\mu$m, obtained by multiplying the arithmetic mean roughness $Ra_2$ by 1.3. As the roughness parameters to be input to the software, values obtained by converting, according to the above-mentioned regression equations, the arithmetic mean roughness $Ra_2$ to the corresponding roughness parameters were employed. Also in the following No. 7 to No. 14, values converted by the above-described method were employed as the roughness parameters of the bearing member to be input to the software.

Operating conditions

Rotation speed: the rotation speed of the shaft member 102 was set to 3,500 rpm.
Load: the load applied to the inner peripheral face of the bearing member was increased in stages from 0.1 kN to 200 kN.
Lubricating oil: a lubricating oil having a density of 871 kg/m$^3$ and a specific heat of 2,083 J/(kg·K) was used. Furthermore, the viscosity of the lubricating oil was fixed to $9.8 \times 10^{-3}$ Pa·sec. This viscosity corresponds to the viscosity of FBK OIL RO32, available from ENEOS Corporation, at 70 °C.
Model at the time of solid contact: at the time of solid contact between the shaft member and the bearing member, a perfect elasto-plastic body having a yield stress of 200 MPa was used as a plastic deformation model of surface roughness projections.

No. 7

In No. 7, the shaft member 102 in FIG. 7 was used, and the following configuration conditions were set. Furthermore, the operating conditions were similar to that of No. 6.

Configuration conditions

Shaft member: the configuration was similar to that of No. 6 except that the arithmetic mean roughness Rai of the outer peripheral face was set to 0.08 $\mu$m, the root mean square roughness Rqi was set to 0.104 $\mu$m, obtained by multiplying the arithmetic mean roughness Rai by 1.3, and the width $L_{A1}$ of the concave portion was set to a value at which the contact rate $A_{at}$ was 0.7.

Bearing member: the configuration was similar to that of No. 6 except that the arithmetic mean roughness $Ra_2$ of the inner peripheral face was set to 0.08 $\mu$m, and the root mean square roughness $Rq_2$ was set to 0.104 $\mu$m, obtained by multiplying the arithmetic mean roughness $Ra_2$ by 1.3.

No. 8

In No. 8, the shaft member 102 in FIG. 7 was used, and the following configuration conditions were set. Furthermore, the operating conditions were similar to those of No. 6.

Configuration conditions

Shaft member: the configuration was similar to that of No. 6 except that the arithmetic mean roughness Rai of the outer peripheral face was set to 0.20 $\mu$m, the root mean square roughness Rqi was set to 0.260 $\mu$m, obtained by multiplying the arithmetic mean roughness Rai by 1.3, and the width $L_{A1}$ of the concave portion was set to the value at which the contact rate $A_{at}$ was 0.7.
Bearing member: the configuration was similar to that of No. 6 except that the arithmetic mean roughness $Ra_2$ of the inner peripheral face was set to 0.20 $\mu$m, and the root mean square roughness $Rq_2$ was set to 0.260 $\mu$m, obtained by multiplying the arithmetic mean roughness $Ra_2$ by 1.3.

No. 9

In No. 9, the shaft member 102 in FIG. 7 and the same bearing member as in No. 6 were used. Furthermore, the operating conditions were similar to those of No. 6.

Configuration conditions

Shaft member: the configuration was similar to that of No. 6 except that the width $L_{A1}$ of the concave portion was set to the value at which the contact rate $A_{at}$ was 0.7.

No. 10

In No. 10, the following configuration conditions were set. Furthermore, the operating conditions were similar to those of No. 6.

Configuration conditions

Shaft member: as the shaft member, steel in which the axial direction length was 15.6 mm, the shaft diameter was 48.0 mm, the stiffness was 205,000 N/mm$^2$, and the Poisson's ratio was 0.30 was used. The arithmetic mean roughness Rai of the outer peripheral face of the shaft member was set to 0.08 $\mu$m, and the root mean square roughness Rqi was set to 0.104 $\mu$m, obtained by multiplying the arithmetic mean roughness Rai by 1.3. The outer peripheral face of the shaft member did not have a concave portion, and the contact rate $A_{at}$ was 1.0.
Bearing member: the configuration was similar to that of No. 6 except that the arithmetic mean roughness $Ra_2$ of the inner peripheral face was set to 0.08 $\mu$m, and the root mean square roughness $Rq_2$ was set to 0.104 $\mu$m, obtained by multiplying the arithmetic mean roughness $Ra_2$ by 1.3.

No. 11

In No. 11, the following configuration conditions were set. Furthermore, the operating conditions were similar to those of No. 6.

Configuration conditions

Shaft member: the configuration was similar to that of No. 10 except that the arithmetic mean roughness Rai of the outer peripheral face was set to 0.20 $\mu$m, and the root mean square roughness Rqi was set to 0.260 $\mu$m, obtained by multiplying the arithmetic mean roughness Rai by 1.3.
Bearing member: the configuration was similar to that of No. 6 except that the arithmetic mean roughness $Ra_2$ of the inner peripheral face was set to 0.20 $\mu$m, and the root mean square roughness $Rq_2$ was set to 0.260 $\mu$m, obtained by multiplying the arithmetic mean roughness $Ra_2$ by 1.3.

No. 12

In No. 12, the following configuration conditions were set. Furthermore, the operating conditions were similar to those of No. 6.

Configuration conditions

Shaft member: the configuration was similar to that of No. 10 except that the arithmetic mean roughness Rai of the outer peripheral face was set to 0.40 $\mu$m, and the root mean square roughness Rqi was set to 0.520 $\mu$m, obtained by multiplying the arithmetic mean roughness Rai by 1.3.
Bearing member: the same bearing member as in No. 6 was used.

No. 13

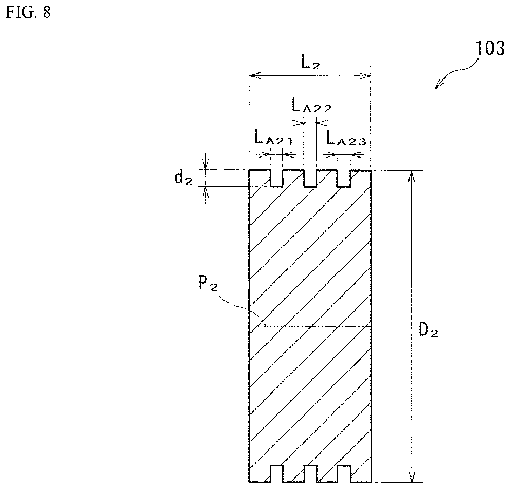

In No. 13, a shaft member 103 in FIG. 8 was used, and the following configuration conditions were set. Furthermore, the operating conditions were similar to those of No. 6.

Configuration conditions

Shaft member: as the shaft member 103, steel in which an axial direction length $L_2$ was 15.6 mm, a shaft diameter $D_2$ was 48.0 mm, the stiffness was 205,000 N/mm$^2$, and the Poisson's ratio was 0.30 was used. The arithmetic mean roughness Rai of an outer peripheral face of the shaft member 103 was set to 0.20 $\mu$m, and the root mean square roughness Rqi was set to 0.260 $\mu$m, obtained by multiplying the arithmetic mean roughness Rai by 1.3. The outer peripheral face of the shaft member 103 has three ring-shaped concave portions extending in the circumferential direction thereof. These concave portions have rectangular cross sections which have widths (lengths in the axial direction of the shaft member 103) of $L_{A21}$ [mm], $L_{A22}$ [mm], and $L_{A23}$ [mm], respectively, and each of which has a depth of $d_2$ [mm]. The widths $L_{A21}$, $L_{A22}$, and $L_{A23}$ of the concave portions are equal to each other. In the axial direction of the shaft member 103, the concave portions are arranged at regular intervals. The depth $d_2$ of each of the concave portions was set to 10 $\mu$m. The concave portions are contact-free parts which do not come into contact with the bearing member at the time of rotating the shaft member 103. Thus, the contact rate $A_{at}$ between the shaft member 103 and the bearing member is calculated by $(L_2 - L_{A21} - L_{A22} - L_{A23}) / L_2$. Each of the widths $L_{A21}$, $L_{A22}$, and $L_{A23}$ of the concave portions was set to a value at which the contact rate $A_{at}$ was 0.7.
Bearing member: the configuration was similar to that of No. 6 except that the arithmetic mean roughness Ra$_2$ of the inner peripheral face was set to 0.20 $\mu$m, and the root mean square roughness Rq$_2$ was set to 0.260 $\mu$m, obtained by multiplying the arithmetic mean roughness Ra$_2$ by 1.3.

No. 14

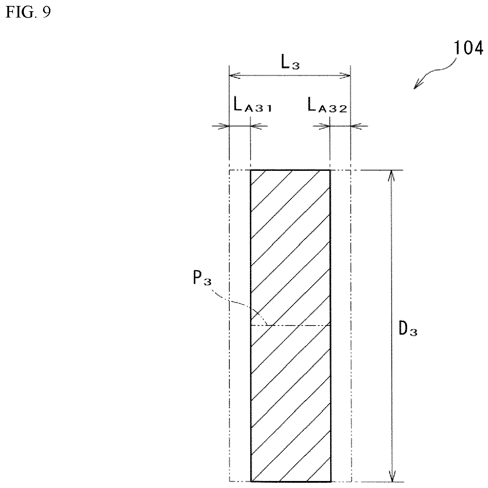

In No. 14, a shaft member 104 in FIG. 9 was used, and the following configuration conditions were set. Furthermore, the operating conditions were similar to those of No. 6.

Configuration conditions

Shaft member: an axial direction length of the shaft member 104 is controlled to be smaller than an axial direction length $L_3$ of the inner peripheral face of the bearing member (bearing width $L_3$). That is to say, the axial direction length of the shaft member 104 is, at both ends thereof, shorter than that of the inner peripheral face by $L_{A31}$ [mm] and $L_{A32}$ [mm], respectively. The amounts $L_{A31}$ and $L_{A32}$ by which the axial direction length has been shortened are equal. The shaft member 104 simulates a shaft member having contact-free parts on both ends thereof. As the shaft member 104, steel in which the axial direction length was $L_3 - L_{A31} - L_{A32}$ [mm], a shaft diameter $D_3$ was 48.0 mm, the stiffness was 205,000 N/mm$^2$, and the Poisson's ratio was 0.30 was used. The arithmetic mean roughness Rai of the outer peripheral face of the shaft member 104 was set to 0.20 $\mu$m, and the root mean square roughness Rqi was set to 0.260 $\mu$m, obtained by multiplying the arithmetic mean roughness Rai by 1.3. The contact rate $A_{at}$ between the shaft member 104 and the bearing member is calculated by $(L_3 - L_{A31} - L_{A32}) / L_3$. Furthermore, each of $L_{A31}$ and $L_{A32}$ was set to a value at which the contact rate $A_{at}$ was 0.7.
Bearing member: the configuration was similar to that of No. 6 except that the arithmetic mean roughness Ra$_2$ of the inner peripheral face was set to 0.20 $\mu$m, and the root mean square roughness Rq$_2$ was set to 0.260 $\mu$m, obtained by multiplying the arithmetic mean roughness Ra$_2$ by 1.3. That is to say, the axial direction length $L_3$ of the inner peripheral face of the bearing member was set to 15.6 mm.

As shown in FIG. 3, when comparing No. 10 to No. 12, in which the contact rate $A_{at}$ is 1.0 and equal, at the same bearing pressure, the lower the arithmetic mean roughness Rai is, the higher the minimum film thickness ratio A is. Also in FIG. 4, at the same bearing pressure, the minimum film thickness ratio A of No. 7, in which the arithmetic mean roughness Rai is low, is high as compared with that of No. 6 and No. 9, in which the arithmetic mean roughness Rai is high. Furthermore, at the same bearing pressure, the minimum film thickness ratio A of No. 9, in which the contact rate $A_{at}$ is 0.7, is higher than that of No. 6, in which the contact rate $A_{at}$ is 0.6. When comparing No. 8, No. 13, and No. 14, which are equal in terms of the contact rate $A_{at}$ and the arithmetic mean roughness Rai in FIG. 5, it is found that the minimum film thickness ratio A varies owing to the difference in the disposition of the contact-free part(s).

FIG. 6 shows a tendency for the maximum contact pressure to be uniquely determined by the minimum film thickness ratio A, regardless of the contact rate $A_{at}$, the arithmetic mean roughness $Ra_1$, and the disposition of the contact-free part(s). Therefore, the magnitude of the minimum film thickness ratio A can be used as an indicator that shows resistance to the seizure between the shaft member and the bearing member. Furthermore, as described above, since the minimum film thickness ratio A increases as the arithmetic mean roughness Rai decreases and the contact rate $A_{at}$ increases, the sliding member in this simulation test has superior seizure resistance when the arithmetic mean roughness is lower and the contact rate $A_{at}$ is higher.

In the seizure test, the limit load of No. 4 is 8.5 kN, and this limit load is converted to the bearing pressure of 11.4 MPa. Accordingly, it is considered that in No. 4, seizure occurs under the condition of the bearing pressure of approximately 12.0 MPa. Meanwhile, the condition of No. 4 corresponds to that of No. 12, in which the arithmetic mean roughness Rai of the shaft member is 0.40 $\mu$m and the contact rate $A_{at}$ is 1.0. According to FIG. 3, in No. 12, the minimum film thickness ratio A at the bearing pressure of 12.0 MPa is 2.2. The minimum film thickness ratio A of 2.2 satisfies a range of the minimum film thickness ratio A of less than 3, in which it is generally possible for seizure to occur. Furthermore, referring to FIG. 6, the maximum contact pressure is generated at the minimum film thickness ratio A of around 2.2. Accordingly, in this simulation test, it was concluded that seizure occurred at the bearing pressure at which the minimum film thickness ratio A was 2.2. That is to say, the bearing pressure at which the minimum film thickness ratio A was 2.2 was defined as a seizure limit bearing pressure $P_{lim}$ [MPa].

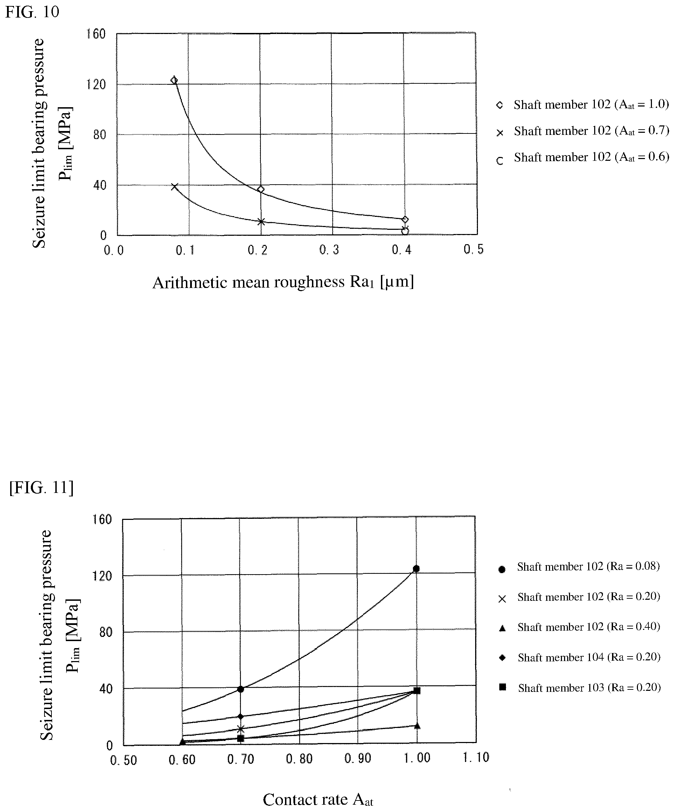

FIG. 10 shows a plot obtained by reading, as the seizure limit bearing pressure, the bearing pressure at which the minimum film thickness ratio A was 2.2 in each of FIGs. 3 to 5, wherein the horizontal axis represents the arithmetic mean roughness and the vertical axis represents the seizure limit bearing pressure $P_{lim}$. Furthermore, each curve in FIG. 10 means a power approximation of the plotted values. In the conditions in which the shaft member 102 was used and the contact rate $A_{at}$ was 1.0, in the case in which the arithmetic mean roughness of the outer peripheral face of the shaft member is denoted by Rai [$\mu$m], the seizure limit bearing pressure $P_{lim}$ was approximated by Rai raised to the power of -1.44. On the other hand, in the conditions in which the shaft member 102 was used and the contact rate $A_{at}$ was 0.7, the seizure limit bearing pressure $P_{lim}$ was approximated by Rai raised to the power of -1.39. This indicates that the seizure limit bearing pressure $P_{lim}$ is proportional to the arithmetic mean roughness Rai raised to the power of approximately -1.4, without being influenced by the contact rate $A_{at}$.

FIG. 11 shows a plot obtained by reading, as the seizure limit bearing pressure, the bearing pressure at which the minimum film thickness ratio A was 2.2 in each of FIGs. 3 to 5, wherein the horizontal axis represents the contact rate $A_{at}$ and the vertical axis represents the seizure limit bearing pressure $P_{lim}$. Furthermore, each curve in FIG. 11 means a power approximation of the plotted values. In the conditions in which the shaft member 102 was used and the arithmetic mean roughness Rai was 0.08 $\mu$m, the seizure limit bearing pressure $P_{lim}$ was approximated by Rai raised to the power of 3.24. In the conditions in which the shaft member 102 was used and the arithmetic mean roughness Rai was 0.20 $\mu$m, the seizure limit bearing pressure $P_{lim}$ was approximated by Rai raised to the power of 3.44. In the conditions in which the shaft member 102 was used and the arithmetic mean roughness Rai was 0.40 $\mu$m, the seizure limit bearing pressure $P_{lim}$ was approximated by Rai raised to the power of 2.91. This indicates that the seizure limit bearing pressure $P_{lim}$ in the case of using the shaft member 102 is proportional to the contact rate $A_{at}$ raised to the power of approximately 3.2, without being influenced by the arithmetic mean roughness $Ra_1$.

On the other hand, in the conditions in which the shaft member 103 was used and the arithmetic mean roughness Rai was 0.20 $\mu$m, the seizure limit bearing pressure $P_{lim}$ was approximated by Rai raised to the power of 6.10. Furthermore, in the conditions in which the shaft member 104 was used and the arithmetic mean roughness Rai was 0.20 $\mu$m, the seizure limit bearing pressure $P_{lim}$ was approximated by Rai raised to the power of 1.77.

According to the above discussion regarding FIGs. 10 and 11, it is considered that the arithmetic mean roughness Rai [$\mu$m] and the contact rate $A_{at}$ independently contribute to the seizure limit bearing pressure $P_{lim}$ [MPa]. Hence, it was presumed that the seizure limit bearing pressure $P_{lim}$ was calculated according to the following formula 3. It is to be noted that in the following formula 3, $\alpha$, $\beta$, and $\gamma$ denote constants determined by the shape of the shaft member.

$$P_{lim} = \alpha\, Ra_1{}^{\beta}\, A_{at}{}^{\gamma} \qquad \cdot\cdot\cdot\, 3$$

Based on the values of the seizure limit bearing pressure $P_{lim}$ in the simulation test, values of $\alpha$, $\beta$, and $\gamma$ in the above formula 3 were derived. As a result, in the case of using the shaft member 102, $\alpha = 3.6$, $\beta = -1.4$, and $\gamma = 3.2$ can be assigned to the above formula 3; in the case of using the shaft member 103, $\alpha = 3.6$, $\beta = -1.4$, and $\gamma = 6.1$ can be assigned to the above formula 3; and in the case of using the shaft member 104, $\alpha = 3.6$, $\beta = -1.4$, and $\gamma = 1.8$ can be assigned to the above formula 3.

It is considered that the seizure between the shaft member and the bearing member is inhibited under the condition in which the seizure limit bearing pressure $P_{lim}$ in the above formula 3 is sufficiently high. For example, by using 26.71 MPa, obtained by converting the maximum load of 20 kN in the seizure test to the bearing pressure, $P_{lim} \geq 26.71$ can be employed as a condition for inhibiting the seizure. This condition is obtained as the following formula 4 by using the above formula 3.

$$A_{at} \geq \left(\frac{26.71}{\alpha}\right)^{\frac{1}{\gamma}} Ra_1^{-\frac{\beta}{\gamma}} \qquad \cdots \ 4$$

In a manufacturing process of a crankshaft of a vessel, in a case in which the contact condition between the shaft member and the bearing member becomes poor after mechanical processing, contact-free parts are often generated at both ends of the shaft member. Thus, the above formula 1 was obtained by substituting $\alpha = 3.6$, $\beta = -1.4$, and $\gamma = 1.8$, which are the parameters in the case of using the shaft member 104, into the above formula 4.

INDUSTRIAL APPLICABILITY

The sliding member according to the present invention enables inhibition of the seizure between the shaft member and the bearing member while the manufacturing cost is suppressed, and can be thus applied to, for example, a sliding member for a ship.

Explanation of the Reference Symbols

1, 102, 103, 104 Shaft member
11 Outer peripheral face
2 Bearing member
21 Inner peripheral face
3 Lubricating oil
31 Oil film
D, $D_1$, $D_2$, $D_3$ Shaft diameter
P, $P_1$, $P_2$, $P_3$ Central axis of shaft member
$L_1$, $L_2$ Axial direction length of shaft member
$L_3$ Axial direction length of bearing member
$L_{A1}$, $L_{A21}$, $L_{A22}$, $L_{A23}$ Width of concave portion
$L_{A31}$, $L_{A32}$ Contraction amount of axial direction length of shaft member
$di$, $d_2$ Depth of concave portion

**Claims**

**1.** A sliding member comprising:

a shaft member (1, 102, 103, 104) having a shaft diameter (D) of greater than or equal to 180 mm; and
a bearing member (2) having an inner peripheral face (21) which slidably supports an outer peripheral face (11) of the shaft member (1, 102, 103, 104),
wherein the outer peripheral face (11) of the shaft member (1, 102, 103, 104) is polished in part and not in its entirety by manual polishing after mechanical processing,
wherein
in a case in which an arithmetic mean roughness of the outer peripheral face (11) is denoted by Rai [$\mu$m], a contact rate $A_{at}$ between the outer peripheral face (11) and the inner peripheral face (21) satisfies formula 1:

$$A_{at} \geqq 3.04\,Ra_1^{0.78} \qquad \cdots \quad 1$$

wherein the contact rate $A_{at}$ and the arithmetic mean roughness Rai of the outer peripheral face (11) of the shaft member (1, 102, 103, 104) are determined in accordance with the methods defined respectively in paragraphs [0022] and [0021] in the description.

**2.** The sliding member according to claim 1, wherein the arithmetic mean roughness Rai is less than or equal to 0.20 $\mu$m.

**3.** The sliding member according to claim 1 or 2, wherein the shaft member (1, 102, 103, 104) is a crank journal or a crankpin of a crankshaft.

**4.** A method for manufacturing a sliding member comprising:

a shaft member (1, 102, 103, 104) having a shaft diameter (D) of greater than or equal to 180 mm; and
a bearing member (2) having an inner peripheral face (21) which slidably supports an outer peripheral face (11) of the shaft member (1, 102, 103, 104),
the method comprising:

manually polishing the outer peripheral face (11) in part and not in its entirety such that in a case in which an arithmetic mean roughness of the outer peripheral face (11) is denoted by Rai [$\mu$m], a contact rate $A_{at}$ between the outer peripheral face (11) and the inner peripheral face (21) satisfies formula 1:

$$A_{at} \geqq 3.04\,Ra_1^{0.78} \qquad \cdots \quad 1$$

wherein the contact rate $A_{at}$ and the arithmetic mean roughness Rai of the outer peripheral face (11) of the shaft member (1, 102, 103, 104) are determined in accordance with the methods defined respectively in paragraphs [0022] and [0021] in the description.

**Patentansprüche**

**1.** Gleitelement, umfassend:

ein Wellenelement (1, 102, 103, 104) mit einem Wellendurchmesser (D) von größer als oder gleich 180 mm; und
ein Lagerelement (2) mit einer inneren Umfangsfläche (21), die eine äußere Umfangsfläche (11) des Wellenelements (1, 102, 103, 104) gleitend trägt,
wobei die äußere Umfangsfläche (11) des Wellenelements (1, 102, 103, 104) in einem Teil und nicht in ihrer Gesamtheit durch manuelles Polieren nach der mechanischen Bearbeitung poliert ist;
wobei
in einem Fall, in dem eine arithmetische mittlere Rauheit der äußeren Umfangsfläche (11) mit $Ra_1$ [$\mu$m] bezeichnet wird, eine Kontaktrate $A_{at}$ zwischen der äußeren Umfangsfläche (11) und der inneren Umfangsfläche (21) die Formel 1 erfüllt:

$$A_{at} \geq 3{,}04\,Ra_1^{0.78} \qquad \cdots \quad 1$$

wobei die Kontaktrate $A_{at}$ und die arithmetische mittlere Rauheit $Ra_1$ der äußeren Umfangsfläche (11) des Wellenelements (1, 102, 103, 104) gemäß den in den Absätzen [0022] bzw. [0021] der Beschreibung definierten Verfahren bestimmt werden.

**2.** Gleitelement nach Anspruch 1, wobei die arithmetische mittlere Rauheit $Ra_1$ kleiner als oder gleich wie 0,20 $\mu$m ist.

**3.** Gleitelement nach Anspruch 1 oder 2, wobei das Wellenelement (1, 102, 103, 104) ein Hubzapfen oder ein Kurbelzapfen einer Kurbelwelle ist.

**4.** Verfahren zur Herstellung eines Gleitelements, umfassend:

ein Wellenelement (1, 102, 103, 104) mit einem Wellendurchmesser (D) von größer als oder gleich 180 mm; und ein Lagerelement (2) mit einer inneren Umfangsfläche (21), die eine äußere Umfangsfläche (11) des Wellenelements (1, 102, 103, 104) gleitend trägt, wobei das Verfahren umfasst:

das manuelle Polieren der äußeren Umfangsfläche (11) in einem Teil und nicht in ihrer Gesamtheit, so dass in einem Fall, in dem eine arithmetische mittlere Rauheit der äußeren Umfangsfläche (11) mit $Ra_1$ [μm] bezeichnet wird, eine Kontaktrate $A_{at}$ zwischen der äußeren Umfangsfläche (11) und der inneren Umfangsfläche (21) die Formel 1 erfüllt:

$$A_{at} \geq 3,04 \, Ra_1^{0.78} \qquad \cdots 1$$

wobei die Kontaktrate $A_{at}$ und die arithmetische mittlere der Rauheit $Ra_1$ der äußeren Umfangsfläche (11) des Wellenelements (1, 102, 103, 104) gemäß den in den Absätzen [0022] bzw. [0021] der Beschreibung definierten Verfahren bestimmt werden.

**Revendications**

1. Élément coulissant comprenant :

un élément d'arbre (1, 102, 103, 104) ayant un diamètre d'arbre (D) supérieur ou égal à 180 mm ; et un élément de palier (2) ayant une face périphérique interne (21) qui supporte à coulissement une face périphérique externe (11) de l'élément d'arbre (1, 102, 103, 104),
dans lequel la face périphérique externe (11) de l'élément d'arbre (1, 102, 103, 104) est polie en partie et non dans son intégralité par polissage manuel après usinage mécanique,
dans lequel
dans un cas dans lequel une rugosité moyenne arithmétique de la face périphérique externe (11) est désignée par $Ra_1$ [μm], un taux de contact $A_{at}$ entre la face périphérique externe (11) et la face périphérique interne (21) satisfait la formule 1 :

$$A_{at} \geq 3,04 Ra_1^{0,78} \qquad 1$$

dans laquelle le taux de contact $A_{at}$ et la rugosité moyenne arithmétique $Ra_1$ de la face périphérique externe (11) de l'élément d'arbre (1, 102, 103, 104) sont déterminés conformément aux procédés définis respectivement aux paragraphes [0022] et [0021] dans la description.

2. Élément coulissant selon la revendication 1, dans lequel la rugosité moyenne arithmétique $Ra_1$ est inférieure ou égale à 0,20 μm.

3. Élément coulissant selon la revendication 1 ou 2, dans lequel l'élément d'arbre (1, 102, 103, 104) est un tourillon ou un maneton d'un vilebrequin.

4. Procédé de fabrication d'un élément coulissant comprenant :

un élément d'arbre (1, 102, 103, 104) ayant un diamètre d'arbre (D) supérieur ou égal à 180 mm ; et un élément de palier (2) ayant une face périphérique interne (21) qui supporte à coulissement une face périphérique externe (11) de l'élément d'arbre (1, 102, 103, 104),
le procédé comprenant :

polir manuellement la face périphérique externe (11) en partie et non dans son intégralité de sorte que dans un cas dans lequel une rugosité moyenne arithmétique de la face périphérique externe (11) est désignée par $Ra_1$ [μm], un taux de contact $A_{at}$ entre la face périphérique externe (11) et la face périphérique interne (21) satisfait la formule 1 :

$$A_{at} \geq 3,04 Ra_1^{0,78} \qquad 1$$

dans laquelle le taux de contact $A_{at}$ et la rugosité moyenne arithmétique $Ra_1$ de la face périphérique externe (11) de l'élément d'arbre (1, 102, 103, 104) sont déterminés conformément aux procédés définis respectivement aux paragraphes [0022] et [0021] dans la description.

FIG. 1

FIG. 2

```
                    ┌──────────────────┐
                    │      Start       │
                    └──────────────────┘
                             │
                             ▼
  S1  ┌─────────────────────────────────────────┐
      │              Polishing stp              │
      └─────────────────────────────────────────┘
                             │
                             ▼
                    ┌──────────────────┐
                    │       End        │
                    └──────────────────┘
```

FIG. 3

FIG. 4

FIG. 5

FIG. 6

FIG. 7

FIG. 8

FIG. 9

FIG. 10

Seizure limit bearing pressure $P_{lim}$ [MPa] vs Arithmetic mean roughness $Ra_1$ [μm]

◇ Shaft member 102 ($A_{at}$ = 1.0)

✕ Shaft member 102 ($A_{at}$ = 0.7)

c Shaft member 102 ($A_{at}$ = 0.6)

[FIG. 11]

Seizure limit bearing pressure $P_{lim}$ [MPa] vs Contact rate $A_{at}$

● Shaft member 102 (Ra = 0.08)

✕ Shaft member 102 (Ra = 0.20)

▲ Shaft member 102 (Ra = 0.40)

◆ Shaft member 104 (Ra = 0.20)

■ Shaft member 103 (Ra = 0.20)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4102087 A1

- JP 2004116707 A